# EUROPEAN PATENT APPLICATION

(11) **EP 2 842 769 A1**
(43) Date of publication of application: **04.03.2015**
(21) Application number: 14178296.1
(22) Date of filing: 24.07.2014
(51) Int. Cl.: B60C 23/00, F16J 15/34

(54) **Rotary seal arrangement for a tyre pressurisation system**

(30) Priority: 29.08.2013 GB 201315425
(71) Applicant: AGCO International GmbH, 8212 Neuhausen am Rheinfall (CH)
(72) Inventor: Kreulich, Frank, 87616 Marktoberdorf (DE); Stadele, Alexander, 87616 Marktoberdorf (DE); Leonhart, Herbert, 87616 Marktoberdorf (DE)
(74) Representative: AGCO Intellectual Property Department

(57) **Abstract**

A rotary seal arrangement having a rotatable component supported within a machine component (11), the machine component having a seal cartridge-type holding structure (610) for sealing means (31, 32) which acts to seal off a high pressure area between the components to allow the passage of high pressure fluid therebetween, said holding structure (610) supporting spaced sealing members therein to define said high pressure area therebetween. The holding structure is (610) provided with attachment means (611) on its outer edges for attachment with the machine component 11.The holding structure has at least one abutment area (612) between the attachment means, said abutment area comprising a first surface in one plane for abutment with the machine component and a second surface in a different plane to provide a space (S) between the housing structure and the machine component when said first surface is in abutment with the machine component.

## Description

This invention relates to a rotary seal arrangement on a tyre pressurisation system having a rotatable air passage. In particular, this invention relates to a tyre pressurisation having a rotatable air passage on an agricultural vehicle, or machine.

In order to improve efficiency and safety of an agricultural machine, or an agricultural vehicle such as an agricultural tractor, it is necessary to change the pressure of the tyres depending on whether the tractor is operating, or on the road. When operating in the field, lower tyre pressures are required to reduce ground pressure and compaction and to improve the grip of the tyres with the earth. For road work, higher tyre pressures are required to reduce rolling resistance (which affects the efficiency of the tractor) and to reduce heat generation (which affects the safety of the tractor). The pressures of the tyres may typically be varied by 0.6 bar-2.5 bar when moving between field and road surfaces.

Generally, a tyre inflation and deflation system comprises at least one rotatable air passage which is provided on, or within an axle to carry air to and from the tyres. The rotatable passage may be connected to a further air duct for carrying air. The rotatable passage extends between rigid, stationary parts (which are connected to the vehicle frame, or form a part of the frame, for example an axle housing) and rotating parts (for example, the wheel hubs). Rotating parts such as wheel hubs are equipped with shaft seals to prevent oil from entering the air guiding area of the rotatable passage. Such systems are described in the Applicant's previous UK patent application Nos. GB1021928.5 and GB1021931.9.

Air seals are used to seal the rotatable shaft which comprises the rotatable passage with a non rotatable part of the vehicle comprising a non rotatable passage. The non rotatable part may be the shaft housing in which the shaft and rotatable passage are housed. The rotatable passage is connected to air in take and air out take lines which are connected to an air source. To reduce the wear of the air seals, the sealing lips of the air seals only come into contact with a contact surface of the shaft when the rotatable air passage is charged with air during inflation or deflation. When the rotatable passage is not charged with air, the lips of the air seals are lifted away from the contact surface.

The applicant's UK patent application No. 1021931.9 discloses a non rotatable component of a machine which forms a housing structure for a sealing means which acts to seal off a high pressure area between rotatable and non rotatable machine parts of a machine or vehicle. The holder is press fitted into a machine part so that the surfaces of the holder mate with the machine component to provide a seal, thus preventing an air connection between the chamber which could affect the functioning of the air seals and ultimately the pressure in the tyres. Problems arise during assembly and fitting of the housing because the thin material of the housing splinters easily under the pressure of being press fitted into the machine part. Splinters can then enter the chambers and supply lines and affect operation of the air seals. The thin nature of the wall of the housing also means that heat and/ or forces applied to the housing result in deformation of the housing. The deformations can cause gaps between the sealing lips and the rotatable part resulting in problems with the sealing function, as well as increasing the wear of the sealing lips.

It is an aim of the present invention to provide a rotary seal arrangement for a machine or vehicle having a holding structure which is simple to fit into a machine component and which is less susceptible to deformation from heat and forces than the prior art. It is further aim of the invention to provide a rotary seal arrangement having a holding structure which can be press fitted or loose fitted into a machine component.

In accordance with the invention, there is provided a rotary seal arrangement having a rotatable component supported within a machine component, the machine component having a holding structure for sealing means which acts to seal off a high pressure area between the components to allow the passage of high pressure fluid therebetween, said holding structure supporting spaced sealing members therein to define said high pressure area therebetween, the holding structure provided with attachment means on its outer edges for attachment with the machine component, characterised in that the holding structure has at least one abutment area between the attachment means, said abutment area comprising a first surface in one plane for abutment with the machine component and a second surface in a different plane to provide a space between the housing structure and the machine component when said first surface is in abutment with the machine component.

If the holder is fitted in a machine component by a loose fit, only the attachment means of the housing structure are in contact with the machine component and the remainder of the housing structure is not in abutment with the machine component which reduces the transfer of heat and mechanical vibrations from the machine component to the housing structure and thus reduces deformation of the housing structure. If there is any deformation of the housing structure, the first surface and possibly the second surface will abut with the machine component. If the housing structure is fitted by a press fit arrangement, the first surface of the housing structure at least is in constant abutment with the machine component and the additional support restricts any radial deformation of the housing structure caused by heat or mechanical vibrations from the machine component.

When the housing structure is loose fitted within the machine component, the first surface preferably abuts with the machine component when the holding structure becomes deformed.

Alternatively, when the housing structure is press fitted in the machine component, the first surface is in constant abutment with the machine component.

Preferably, the abutment area is held in engagement with the machine by the attachment means.

More preferably, the abutment area provides a seal between the holder and the machine component.

Preferably, the holding structure is provided with at least three sealing means and two abutment areas.

The invention will now be described, by way of example only, with reference to the drawings, figures 1 to 4e, in which:
Figure 1 is an axial sectional view through half of a tractor rear axle fitted with a tyre inflation feed arrangement in accordance with the invention,
Figure 2 is a section through the rear axle of figure 1 on a larger scale,
Figure 3 is part of figure 2 on a larger scale showing a tyre inflation arrangement in accordance with the present invention, and
Figure 4a show a magnified view of part of figure 3 in which a housing structure is loose fitted within a trumpet housing of a vehicle axle in accordance with the invention,
Figures 4b and 4c are cross sectional views of figure 4a taken along line A-A of figure 4a,
Figure 4d is a magnified view of part of figure 3 in which a housing structure is press fitted within a trumpet housing of a vehicle axle in accordance with the invention, and
Figure 4e is a cross sectional view of figure 4d taken along line A-A of figure 3.

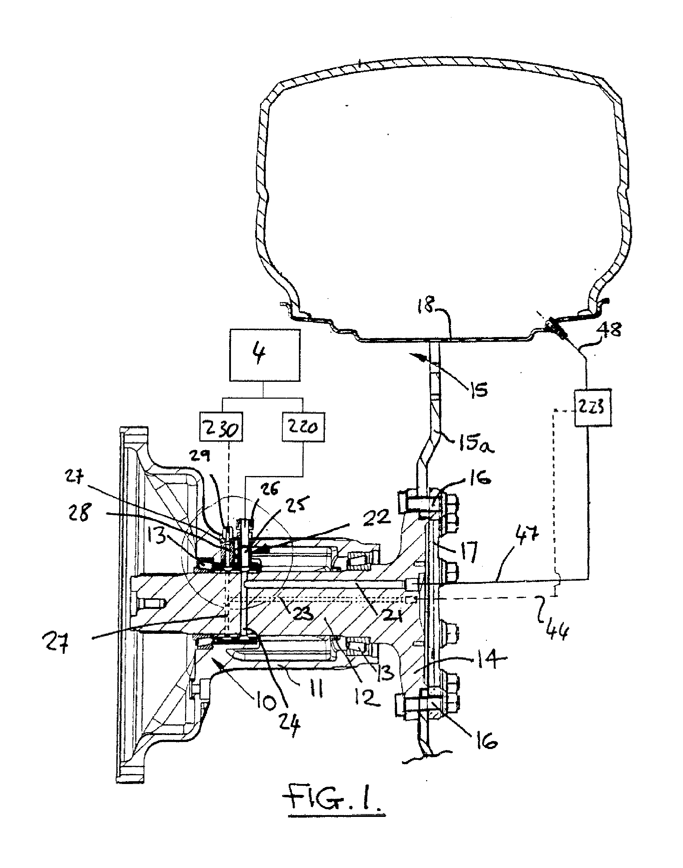

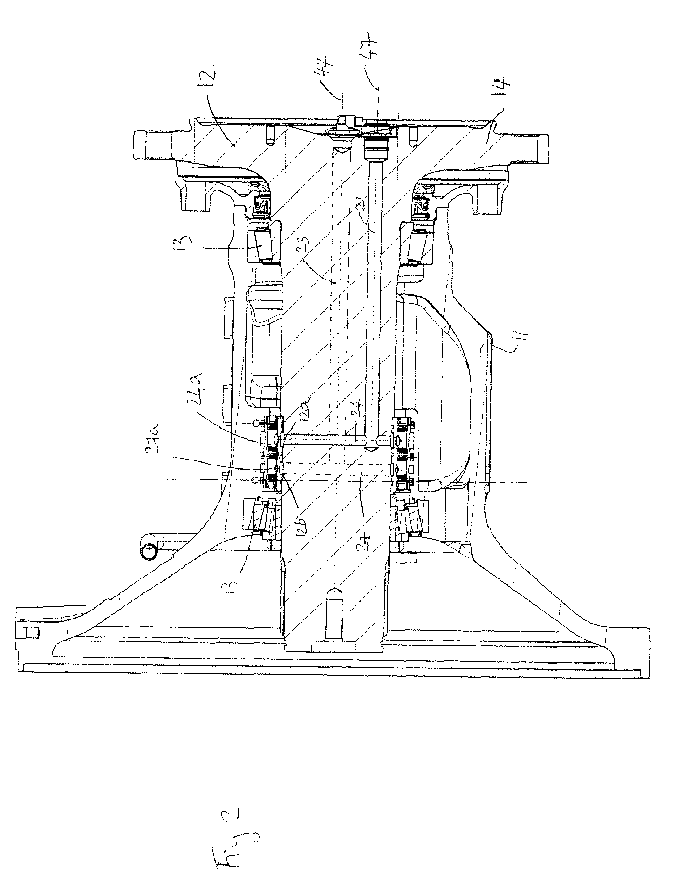

Referring to figures 1 to 4, a tractor rear axle 10, half of which is shown in cross-section in figures 1 and 2, has an outer trumpet housing 11 within which a driveshaft 12 is supported by bearings 13. Driveshaft 12 terminates in a hub flange 14 to which a wheel disc 15a of a wheel 15 is clamped by bolts 16 and a clamping ring 17.

The wheel disc 15a carries a wheel rim 18 on which a pneumatic tyre 19 is mounted. The tyre inflation system conveys compressed air from the tractor air supply system 4 via air control valves mounted on the tractor to the rotating wheel 15 and hence via valve 103 mounted on the wheel to the interior of the tyre 19 via lines 47 and 48. The air supply system 4 provides air to a control circuit and supply circuit (not shown).

The tyre inflation feed arrangement 22 which is shown in greater detail in figure 2 is provided with two rotatable air passages. One rotatable passage comprises a first passage 21 and a first radial feed passage 24. The other rotatable air passage comprises a second passage 23 and a second radial feed passage 27. Each rotatable air passage extends within the shaft 12 from hub 14 to a first and second annular axle zone 12a, 12b on the outer periphery of shaft 12 respectively. At the hub end of the shaft, outside of the hub, shaft and shaft housing, first passage 21 air supply line 47 connects the rotatable air passage with air supply line 47. Second passage 23 is likewise connected to tyre 19 by air supply line 44 outside of the hub, shaft and shaft housing. First radial feed passage 24 extends from first annular zone 12a to first passage. First and second radial feed passages 24, 27 are perpendicularly connected to respective first and second passages 21, 23 which extend inside the enclosed shaft to hub 14. In this way, both the rotatable air passages are fully enclosed within the rotatable shaft 12.

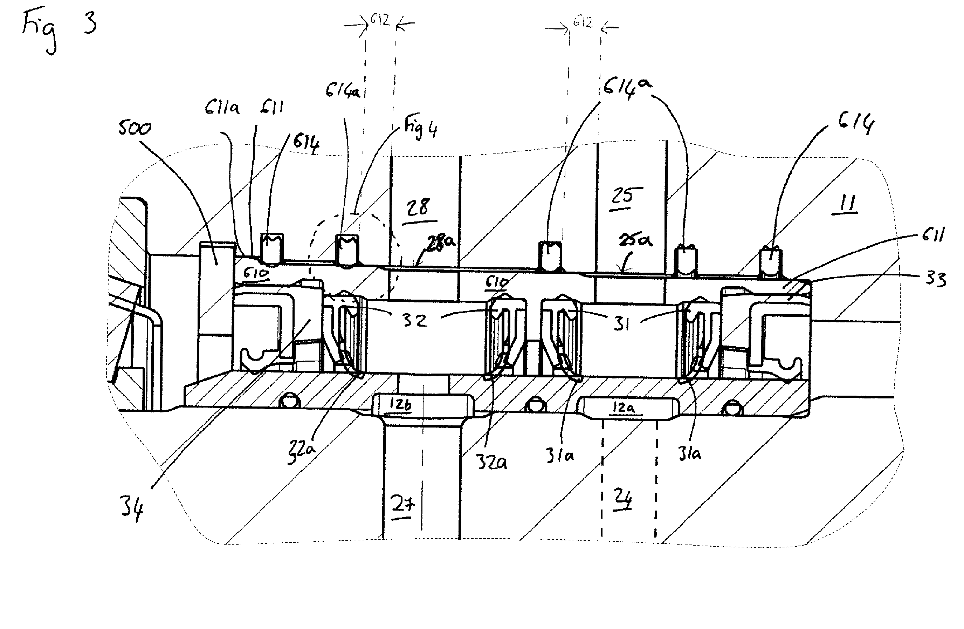

A contact component 30 surrounds annular zones 12a and 12b and is sealed to shaft 12 by seals 30a. Contact component 30 formed from, or coated with plastics material such as PTFE or could be made from stainless steel or could be hardened by nitrogen to resist wear. Radial passages 24 and 27 emerge through contact component 30. A housing structure 610 is fitted within a bore generally referenced as 601 in figure 3 of the axle housing, or non rotatable part. The housing structure 610 provided with sealing means 31, 32 is attached to the axle housing, or non rotatable part. The sealing means 31, 32 when in contact with the contact component 30 provides a through passage with the rotatable air passage so that when the rotatable air passage is pressurised the through passage is also pressurised and ensures the integrity of the sealing means with the contact component 30. The sealing means 31, 32 and the respective sealing lips 31 a, 32a come into contact with the contact means 30 on the axle shaft around annular zones 12a, 12b. Pipes 25 and 28 extend from the exterior of the axle housing, or non rotatable part of the vehicle through the axle housing to the casing. They may be screwed to the casing. With this arrangement there is a free, open passage from the surface of the axle housing, through pipes 26, 29, through the radial zones, through the rotatable air passage to the hub 14. At the exterior of the axle housing pipes 25 and 28 are provided with pipe fittings 26, 29 which are connected by respective lines to the pressurised air supply. Pipes 25, 28 may be made from stainless steel, or, brass, or some other non corroding material.

A first sealing means 31 seals the inner end of pipe 25 to the contact means 30 and a second sealing means 32 seals the inner end of pipe 28 to contact means 30. The two sealing means 31 and 32 are located side by side with shaft seals 33 and 34 axially outermost relative to the two annular axle zones 12a and 12b.

As can be seen in figure 3, sealing means 31, 32 and shaft seals 33, 34 are mounted in a housing structure 610 which may be made of steel for example. Sealing means 31, 32 are arranged in a stable position with respect to one another by the housing structure 610 to form a cartridge like arrangement. The sealing means 31, 32 form a high pressure area between the trumpet housing 11 and the shaft 12 around annular axle zones 12a, 12b. The housing 610 forms a sleeve engaging a recessed part of the machine component. The housing 610 has two circular aperture 25a and 28a in the region of the radial passages 24 and 27 so that air can flow between the housing 11 and radial passages 24 and 27. For radial alignment, the housing 610 is provided with two attachment means 611 at each end, also referred to as the mating area 611 a, which holds the housing 610 in place within the trumpet housing 11. The housing 610 is axially fixed within the trumpet housing 11 by a simple spring ring 500 engaging with a groove in the trumpet housing 11 and a shoulder of housing structure 610. The housing structure 610 shown in figure 3 may be attached to the trumpet housing 11 in two different arrangements.

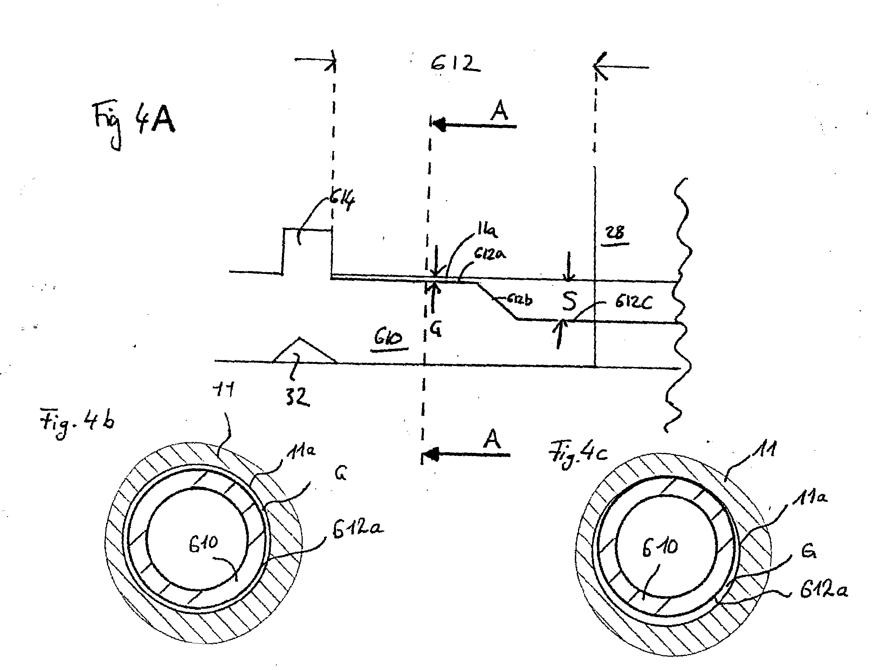

In one arrangement, referred to as loose fit arrangement, as shown in figure 4a (which is a magnified view of the circular broken line of figure 3) the diameter of the bore 601 including a tolerance in the trumpet housing 11 is larger than the outer diameter of the attachment means 611. This results in a defined, small gap, G of 0.04 to 0.16 mm in the mating area 611 a between a surface 11 a of the trumpet housing 11 and an abutment surface 612a of the housing structure 610. This eases assembly as only a small force must be applied during insertion and reduces conduction of forces from the trumpet housing 11 to the housing structure 610, thus reducing deformation and damage to the housing 610. The housing 610 is further provided with sealing means 614 located around the edges of the circular apertures which come into contact with the trumpet housing 11. The three inner sealing means 614 prevent air being transferred from one radial passage 24, 27 to another, or to adjacent areas through the gap resulting from the loose fit arrangement. The two outer sealing means 614 prevent air being transferred from de-airation ducts as described in the applicant's UK patent application No. 1021929.3. Furthermore, sealing means 614 prevent the housing 610 from pivoting relative to trumpet housing 11.

Figures 4b and 4c are cross sectional views of along line A-A of figure 4a. In Figure 4b the gap G is constant and present over the complete circumference as the surface 612a and 11 a are coaxial. In figure 4c the surfaces 612a and 11 a are not coaxial but are still a loose-fit as gap G is still present even if there is local contact between 612a and 11 a. This local contact may be caused by several issues: The parts of the abutment area 612 may deviate from an ideal cylindrical shape in axial direction (so that surface 612a or bore 601 may be curved slightly in axial direction) before assembly. Furthermore, the shape of surface 612a or bore 601 may deviate from a circular shape to that of an elliptical shape. Both result in contact even in a loose-fit arrangement.

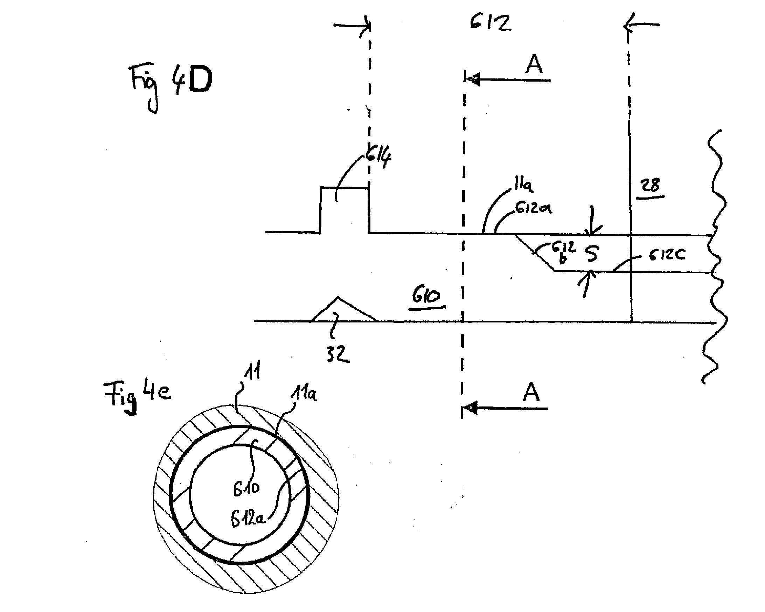

In a second arrangement, referred to as a press fit arrangement, as shown in figure 4d, (which is a magnified view of the circular broken line of figure 3), the housing structure 410 is press fitted into the housing so that the attachment means 611 are in abutment with the trumpet housing 11. In this case, the trumpet housing 11 is provided with a bore 600 having a smaller diameter and a tolerance band than the outer diameter of the attachment means 611. With such an arrangement, there is no need for sealing means 614 since the abutment surface 612a of the housing structure 610s prevent air transferring between the radial passages 24, 27. The abutment areas 612 prevent movement of the housing means 610 within the trumpet housing 11 so that there may be no requirement for axial alignment by spring ring or means to prevent housing 610 from pivoting relative to trumpet housing 11.

Figure 4e is a cross sectional view along line A-A of figure 4d which shows contact between surface 612a or bore 601.

Both arrangements are provided with two abutment areas 612 in the surface of the housing structure facing the machine component. Each abutment area 612 has a first surface 612a, a second surface 612b and a third surface 612c. When viewed in axial cross section, as shown in figures 4a and 4d, the planes of surfaces 612a and 612c are parallel. The plane of second surface 612b is angled with respect to the planes of surfaces 612a and 612c, that is, it lies in a different plane with respect to both planes of first and third surfaces 612a, 612c. The surface of the housing structure 610 facing the machine component thus has a step shaped indentation comprising two generally parallel surfaces 612a, 612c separated by a sloped or perpendicular surface 612b. Surfaces 612a and 612c thus have different diameters. The first surface 612a is provided to abut with a respective facing surface 11 a of the trumpet housing 11.

If the housing structure 610 is fitted by a loose fit arrangement, as shown in figure 4a, a gap G is provided between the first surface 612a and surface 11 a. If the housing structure is fitted by a press fit arrangement, surface 612a abuts with surface 11 a of the trumpet housing. Because of second surface 612b, there is also a space S between the trumpet housing surface 11 a and third surface 612c of the housing structure.

In case of a loose fit arrangement, the attachment means 611 hold the housing structure in place within the trumpet housing and the remainder of the housing structure is maintained a at a distance, gap G away from the trumpet housing 11 under usual circumstances. Only sealing means 614 contact the trumpet housing 11 a to prevent air being transferred from one radial passage 24, 27 to the other, or to adjacent areas through the gap G resulting from the loose fit. Radial deformation of the housing structure 610 caused by heat or mechanical load is limited in this way. If there is any deformation of the housing structure 610, surface 612a and possibly surface 612b will abut with surface 11 a of the trumpet housing.

In case of a press fit connection, the additional support provided by the constant abutment of surface 612a restricts any radial deformation of the housing structure 610 caused by heat or mechanical load. This ensures a good sealing contact between seals 31, 32 and contact member 30 as heat or mechanical load can only vary the distance between sealing lip 31 a, 32a and contact member 30 in a pre-determined range. Because of second surface 612b, there is also a space S between the trumpet housing surface 11 a and third surface 612c of the housing structure.

The invention thus provides a housing structure which can be loose or press fitted into a machine part and which has minimal contact with the machine part which thus reduces any heat or mechanical deformations to it. Further, when loose fitted any deformations to the housing structure will result in surface 612a or 612b abutting with the trumpet housing and therefore providing additional support to the housing and restrict further deformation. When press fitted, the constant abutment of surface 612a with restricts any deformation of the housing structure 610 caused by heat or mechanical load.

Although in the embodiments described the seals 31 and 32 are carried by housing 610 the seals 31, 32 could be mounted of the trumpet housing 11, if desired.

## Claims

1. A rotary seal arrangement having a rotatable component supported within a machine component (11), the machine component having a holding structure (610) for sealing means (31, 32) which acts to seal off a high pressure area between the components to allow the passage of high pressure fluid therebetween, said holding structure (610) supporting spaced sealing members therein to define said high pressure area therebetween, the holding structure (610) provided with attachment means (611) on its outer edges for attachment with the machine component 11, **characterised in that** the holding structure has at least one abutment area 612 between the attachment means, said abutment area comprising a first surface in one plane for abutment with the machine component and a second surface in a different plane to provide a space S between the housing structure and the machine component when said first surface is in abutment with the machine component.

2. A rotary seal arrangement as claimed in claim 1 wherein the first surface abuts with the machine component when the holding structure (610) becomes deformed.

3. A rotary seal arrangement as claimed in claim 1 wherein the first surface (612a) abuts with the machine when the holding structure is press fitted into the machine component.

4. A rotary seal arrangement as claimed in claim 3 wherein the abutment area (612) is held in constant engagement with the machine component by the attachment means (611).

5. A rotary seal arrangement as claimed in any preceding claim wherein the abutment area (612) provides a seal between the holder (610) and the machine component 11.

6. A rotary seal arrangement as claimed in any preceding claim wherein the holding structure (610) is provided with at least three sealing means (614) and two abutment areas (612).
